# EUROPEAN PATENT APPLICATION

(11) **EP 1 403 830 A2**
(43) Date of publication of application: **31.03.2004**
(21) Application number: 03021840.8
(22) Date of filing: 26.09.2003
(51) Int. Cl.: G07F 17/10, G07F 17/12, G07F 7/00

(54) **Automatic device for withdrawing and delivering items**

(30) Priority: 26.09.2002 IT BO20020608
(71) Applicant: Saksida, Danijel, 2354 Bresternica (SL)
(72) Inventor: Saksida, Danijel, 2354 Bresternica (SL)
(74) Representative: Negrini, Elena

(57) **Abstract**

An automatic device for withdrawing and delivering items (50, 51) includes a first opening (15) for reaching moving means (2), moved by a first actuator means (20) in a room (11) of device (1) between a withdrawal condition (A), in which at least an item to be withdrawn (50) can be manually inserted by an user into the room (11) through the first opening (15) to be transferred by moving means (2) to exit means (30), and a delivery condition (B), in which at least an item to be delivered (51) coming from a store is supported by moving means (2) and delivered to the user through said first opening (15).

## Description

The present invention relates to devices for automatically collecting and delivering objects and items, particularly it refers to an automatic device for withdrawing and delivery items, such as garments, linen, items of clothing to be washed or to be guarded.

In industrial laundries and in cloakrooms of theatres, casinos, hotels, etc., there are often transport belts or chains, on which clothing or linen items are hanged, waiting to be returned to the legitimate owners after their washing or custody. The belts act like mobile supports, having high capacity and in which the each item position is univocally defined by a serial number and the belt motion allows quickly and easily moving said item from a storage zone to a picking up zone. At present, one or more operators are needed to withdraw an item from customer hands and to deliver the item to the customer, once the item has been picked from the belt.

The main drawback of the above-mentioned systems consists in necessity to have assigned operators or workers, with consequent high management costs of the system, particularly in case of long-standing and continuous duty, with personnel shift and turnover. In the specific case of industrial laundries, the use of workers requires shop opening and closing time for the public, restricting and limiting in this way the public accessibility.

There are also known automatic devices used for instance in some laundry, fit for delivering linen and clothing and for allowing an enabled customer to withdraw his own items also in absence of personnel. Said devices include suitable handling and transport means, which are controlled by electronic control systems and provide to pick up items from the mobile support, according to data supplied by the customer.

The main drawback of the aforesaid known devices consists in that they allow only the automatic delivering of the items, while the withdrawal thereof requires the presence of an operator.

An object of the present invention is to propose an automatic device for withdrawing and delivering items, particularly garments, linen and items of clothing, fit to withdraw and to deliver in automatic way said items, without requiring operators or workers.

Further object is to propose a reliable and safe device, having an intuitive and simple operation for the user.

The above-mentioned objects are achieved in accordance with the content of the claims.

The characteristics of the present invention are underlined in the following, with particular reference to the attached drawings, in which:
- figure 1 shows a front partial section view of the automatic device for withdrawing and delivering items, in a delivery condition;
- figure 2 shows a section view according to line II-II of figure 1;
- figure 3 shows a partial section view according to line III-III of figure 1;
- figure 4 shows a side partial section view of the device of figure 1, in a withdrawal condition and, in broken line, in a transfer condition;
- figure 5 shows a schematic, axonometric and front view of the device of figure 1, fit in a room;
- figure 6 shows a schematic and partial front view of a variant of the device of figure 1;
- figure 7 shows a partial section view according to line VII-VII of figure 6;
- figure 8 shows a front partial view of the device of figure 7;
- figure 9 shows a section view according to line IX-IX of figure 8.

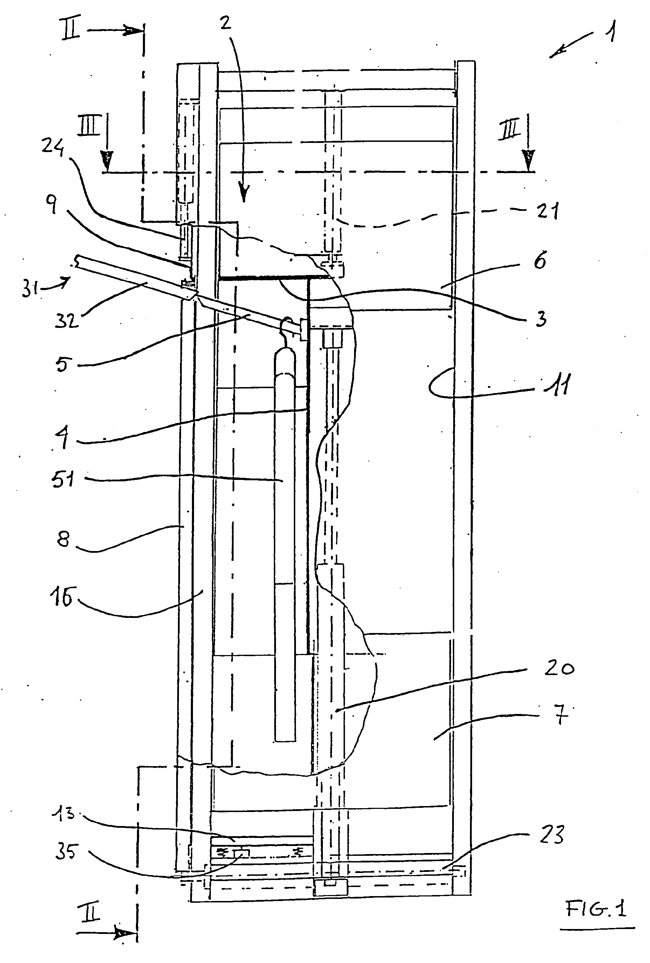

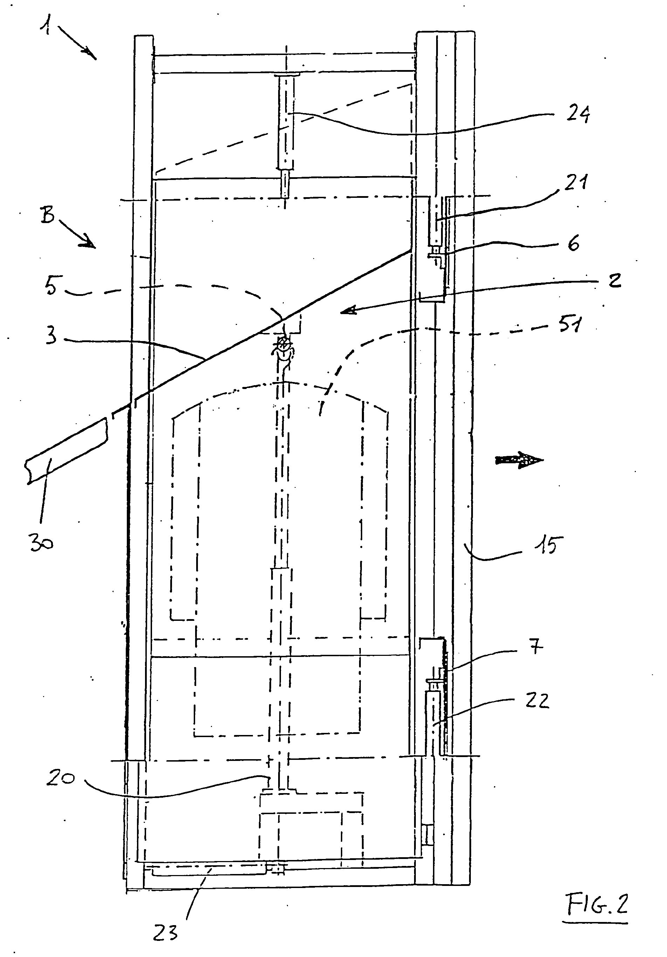

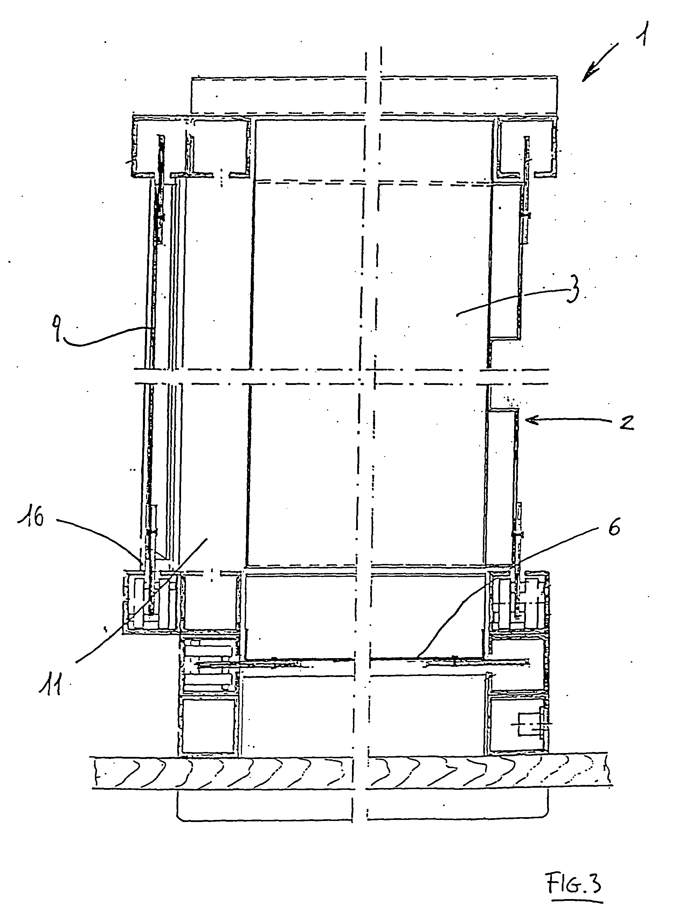

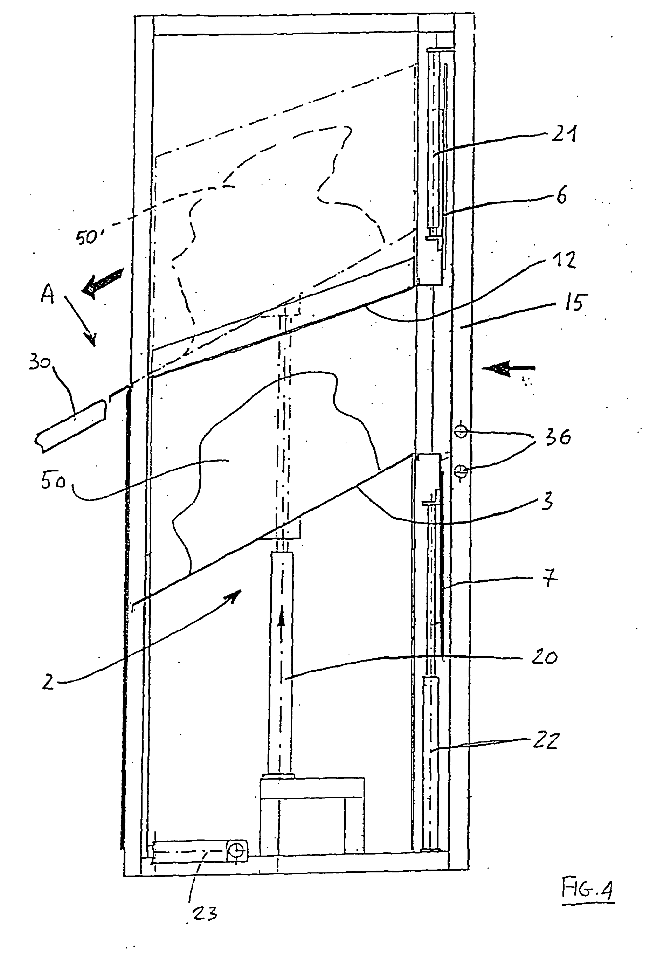

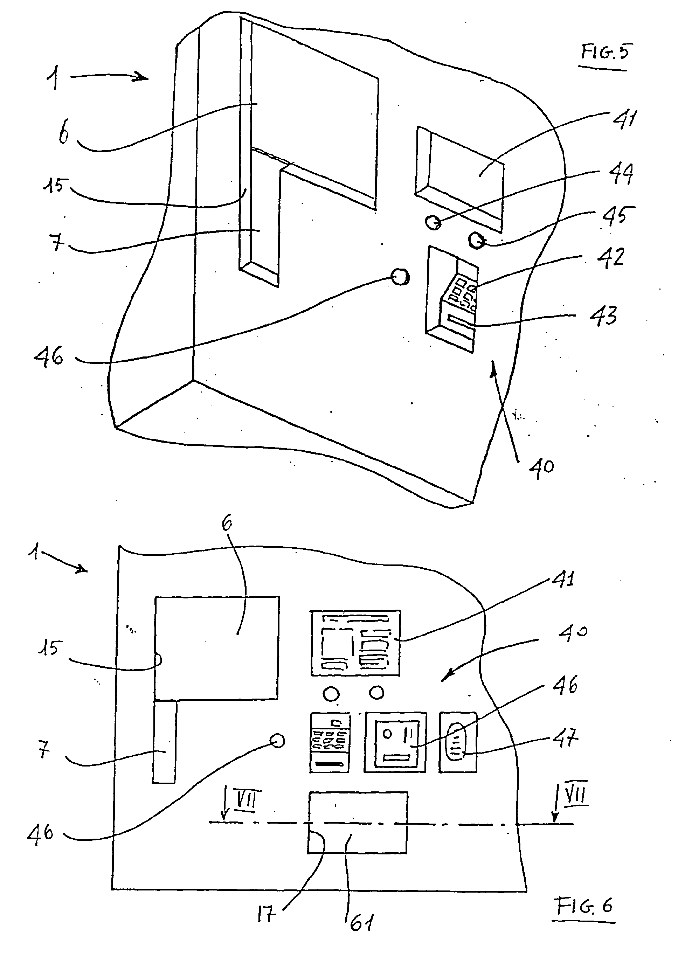

With reference to figures 1 to 5, numeral 1 indicates an automatic device for withdrawing and delivering items 50, 51 basically comprising a first opening 15 admitting to moving means 2, which are operated by a first actuator means 20 in a room 11 of device 1, between a withdrawal condition A and a delivery condition B.

In the withdrawal condition A one or more items to be withdrawn 50, for instance one or more bags of garments or clothes to be washed, are inserted by the user in the room 11 through the first opening 15, in order to be transferred by the moving means 2 to exit means 30, of known type, constituted for instance by a conveyor belt or a container. In the delivery condition B, one or more items to be delivered 51, for instance clean clothes, ironed and refolded on suitable coat hangers, come out from a store, such as an automatically controlled transport chain, of known type and not shown in the figures, and are held by moving means 2 and delivered to the user through the first opening 15.

In the preferred embodiment, said first opening 15 has an upturned "L" shape, with maximum height of 1200 mm, while the "L" foot has a maximum width of 750 mm. A first sliding door 6, actuated by a second actuator means 21, is provided for closing the first opening 15.

In the preferred embodiment the device 1 also includes a second door 7, nearly coplanar with the first door 6, and independently driven by a third actuator means 22. In order to limit the transversal dimensions, that is the width of device 1, the doors 6, 7 vertically slide.

In the withdrawal condition A, the first door 6 is open and the second door 7 is closed and both doors delimit a portion of first opening 15, having a rectangular shape, with width and height respectively of 720 mm and 480 mm. Said portion allows reaching the vain 11 portion which is enclosed by the moving means 2 and is fit for receiving of one or more items to be withdrawn 50.

In the delivery condition B, the full opening of second door 7 and the partial opening of first door 6 make a portion of the first opening 15 which has a long rectangular shape, with a width of around 240 mm and height of 1200 mm, and which allows easy picking up the items to be delivered 51 in the vain 11 portion enclosed by the moving means 2.

The device 1 has first sensor means 36, for instance consisting of known type photocells, positioned at the mouth of first opening 15 for detecting the presence of possible interposed objects or bodies, such as items to be withdrawn 50, which are imperfectly inserted into the room 11, or portions of the user's body, and consequently to stop closing the doors 6, 7.

Moving means 2 include a first wall 3, a second wall 4 and a inclined support 5, fixed to the second wall 4 and fit to support one or more items to be delivered 51. In the specific case, the inclined support 5 consists of an inclined pole on which the coat hangers are hung and which is positioned at least at 1800 mm from the floor. The first wall 3 is inclined downwards starting from the opening 15 in order to allow an item 50, which is positioned thereon, to slide by gravity toward the exit means 30, in a condition in which said first wall 3 is driven by the first actuator means 20 in correspondence of the exit means 30.
A third wall 12 of moving means 2, positioned spaced apart from and nearly parallel to the first wall 3, defines in association with side walls of room 11, an housing portion of moving means 2 in which the articles to be withdrawn 50 are inserted, in the withdrawal condition A.

In the same way, the second wall 4, in association with the first wall 3 and the walls of room 11, defines another housing portion of moving means 2, in which the items to be delivered 51 are contained, in the delivery condition B.

It is provided a second side opening 16, which is fit for setting in communication the room 11 of device 1 with selection means 31 of the store of the items to be delivered 51. The selection means 31, of known type and partially shown in figure 1, for instance consist of a mechanical arm, which picks up the selected item from the transport chain, which constitutes the store, and releases said item to a slide or inclined bar, along which said item comes to the inclined support 5, sliding by gravity.

Two doors, fourth 8 and fifth 9, are provided and independently operated by respective actuator means, fourth 23 and fifth 24, and are fit to close the second opening 16, in order to prevent an user from reaching the selection means 31 and the store, during the delivery condition B, in which the doors, first 6 and second 7, allow the partial access to the room 11. More precisely, the third door 8, which is provided with a suitable slot for the passage of the inclined support 5, is rotatably connected to device 1 and closes the lower part of the second opening 16. The fourth door 9 provides to fully close the second opening 16, by vertically sliding and mating the upper edge of third door 8.

In order to avoid possible effraction attempts from lawbreakers which may try, by forcing the doors fourth 8 and fifth 9, to reach the items to be delivered 51 contained in the store, second weight sensor means 35 are connected to a bottom plan 13 of the room 11 for sensing a person's presence or an object positioned therein, and for generating an alarm signal.

The device is controlled by electronic control means, which are connected to moving means 2, to doors 6, 7, 8, 9 and to sensors 35, 36 and they perform the automatic operation of device 1, on the base of the instructions provided by the user. For this purpose the device has interface means 40, connected to electronic control means and by which the user can activate the withdrawal condition A and delivery condition B.

The interface means 40 are constituted by a display 41, a monitor or a LCD screen, an alphanumeric keyboard 42 and a reader for a magnetic or microprocessor card 43. There are further provided first 44, second 45 and third 46 buttons fit to activate respectively the withdrawal, delivery conditions of items 50, 51 and the closing of doors 6, 7. The electronic control means provide the automatic door closing after a predefined timeout, but the user can close the doors by means of third button 46, once finished the withdrawal and delivery operations. The user by means of third button 46 may also suspend the operation in progress.

The each actuator means 20, 21, 22, 23, 24, 25 consists of a pneumatic or hydraulic cylinder or preferably of an electric linear actuator.

During the operation of the automatic device for withdrawing and delivering items 50, 51 an user through the interface 40 inputs the suitable data, consisting for instance of the user's code, entered by the alphanumeric keyboard 42, and the residual credit contained in the magnetic card read by reader 43, then activates the device 1, selecting by the suitable buttons 44, 45 the desired use condition, that is the withdrawal condition A or the delivery condition B of items 50, 51. In the case the selected condition is the withdrawal condition A, the first door 6 is opened for inserting articles 50 inside the room 11. After the insertion, the user pressing the button 46 closes the door 6 and he causes the raising of moving means 2, which transfer the items 50 to the exit means 30 and lower again for a following use of device 1.

If the delivery condition B is selected, the electronic control means set, by the selection means 31, the picking from the store of the items 51 required by the user and their transfer to the inclined support 5 of moving means 2, through the second opening 16 which is free by virtue of the opening of doors fourth 8 and fifth 9. After the transfer, the doors fourth 8 and fifth 9 are closed again for separating the room 11 from the store, and subsequently the first door 6 is partially opened and the second door 7 fully opened, in order to allow the user to reach and to pick its own items 51 in the room 11. Also in this case, the operation of button 46 closes the doors 6 and 7 and set the device 1 for a further use.

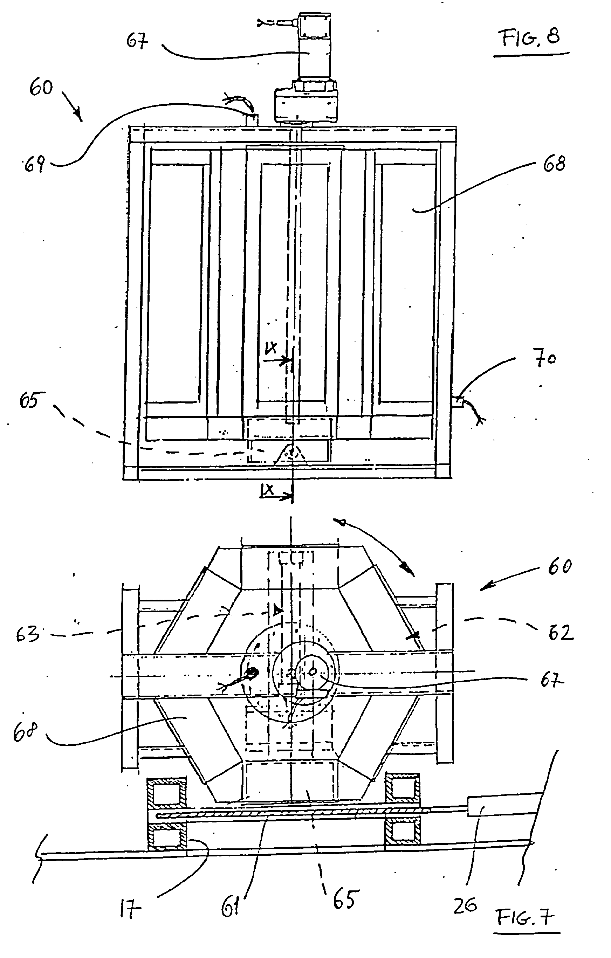

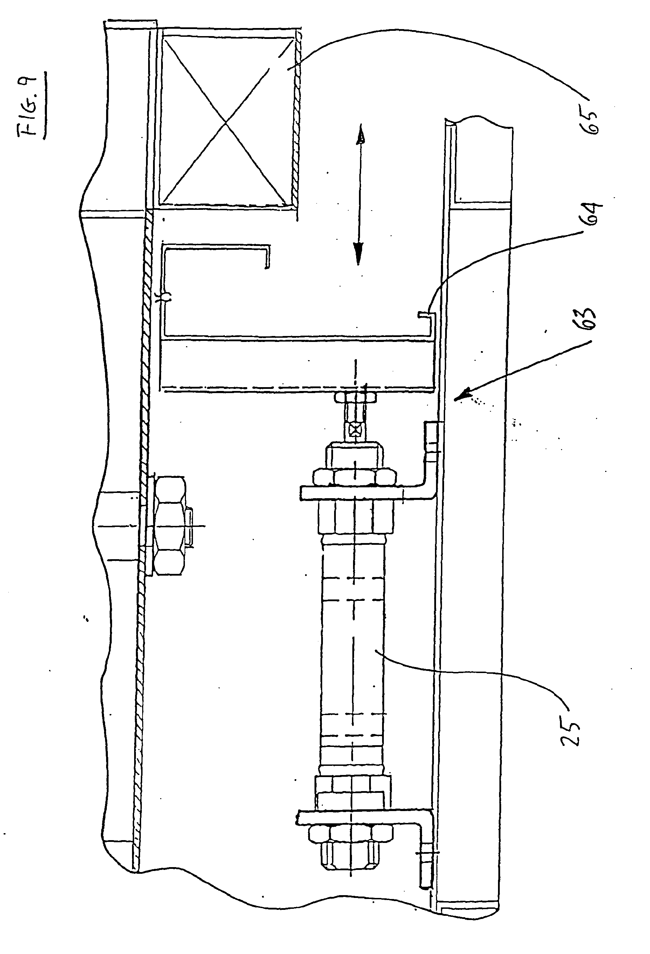

The figures 6 to 9 show a variant object of the present invention, particularly fit for withdrawing and delivering garments, linen, items of clothing to be washed in an industrial laundry. Said variant includes distribution means 60, fit for furnishing an user with elements of use 65 for using the device 1, through a third opening 17 thereof. The elements of use 65, which are provided in kits of different composition, substantially include a magnetic card, containing the customer's identification number and a credit amount, one o more bags for containing items to be withdrawn 50 and a notepad of pre-printed sheets on which to list and to specify the withdrawn articles 50. The elements of use 65 are supplied to the user previous introduction of cash money, in banknotes or coins, through withdrawal means 48, of known type provided in the interface 40.

The latter can also include connection means 47 for a mobile telephony network to allow the data entry into the device 1, for instance for recharging the magnetic card or for buying one or more elements 65, by a user's mobile phone apparatus opportunely enabled.

The distribution means 60 include holding means 62 for the plurality of elements of use 65, divided in different assortments and transfer means 63 thereof to the user through the third opening 17, whose closing is carried out by a fifth door 61, slidably moved by a seventh actuator means 26.

The holding means 62 consist, for instance, of a cylinder, rotatably driven by a gearmotor 67 and including a plurality of containers 68, from two to eight, preferably six, angularly equidistant and fit for containing the elements of use 65 of the corresponding available assortments. According to the choice done by the user and to the collecting request, the cylinder is rotated by the gearmotor 67 in such way that the container 68, containing the desired element 65, is positioned at the third opening 17. The transfer means 63, consisting of a sixth actuator means 25 which drive a pusher means 64, provide moving said element 65 from the container 68 to the user.

The distribution means 60 further include third sensor means 69 and fourth sensor means 70. The third sensor means 69 are fit to detect the angular position of the holding means 62, that is to establish what container 38 is positioned at the third opening 17, while the fourth sensor means 70 are capable to detect whether or not the presence of an element 65, in the container 68 positioned at the third opening 71.

The main advantage of the present invention is to propose an automatic device for withdrawing and delivering items, particularly garments, linen and items of clothing, fit to withdraw and to deliver in automatic way said items, without requiring the presence of operators or workers.

Further advantage is to propose a reliable and safe device, having at the same time an intuitive and simple operation for the user. Other advantage is to provide an automatic device allowing to be used also by new users not yet enabled.

## Claims

1. Automatic device for withdrawing and delivering items (50, 51) **characterized in that** includes at least a first opening (15) for reaching moving means (2) moved by a first actuator means (20) in a room (11) of device (1) between a withdrawal condition (A), in which at least an item to be withdrawn (50) can be manually inserted by a user into the room (11) through the first opening (15) to be transferred by the moving means (2) to exit means (30), and a delivery condition (B), in which at least an item to be delivered (51) coming from a store is supported by the moving means (2) and delivered to the user through said first opening (15).

2. Device according to claim 1 **characterized in that** includes at least a first sliding door (6) for closing at least partially the first opening (15) and driven by a second actuator means (21).

3. Device according to claim 2 **characterized in that** includes a second sliding door (7) almost coplanar to the first door (6) and driven by a third actuator means (22) for partially closing the first opening (15), at least in the withdrawal condition (A).

4. Device according to claims 2 and 3 **characterized in that** the first (6) and second (7) doors slide vertically.

5. Device according to claim 1 **characterized in that** the moving means (2) include at least a first wall (3), a second wall (4), and a inclined support (5), fixed thereto and fit for supporting at least an article to be delivered (51).

6. Device according to claim 5 **characterized in that** the first wall (3) is inclined downward starting from the opening (15) in order to allow at least an item (50) to slide by gravity toward the exit means (30) in a condition in which the first actuator means (20) moves the moving means (2) with the first wall (3) at the exit means (30).

7. Device according to claim 1 **characterized in that** includes a second side opening (16) fit for connecting the room (11) with selection means (31) of the store of articles to be delivered (51).

8. Device according to claim 7 **characterized in that** includes at least a third door (8) rotatably driven by a fourth actuator means (23) and fit to close at least partially the second opening (16).

9. Device according to claim 8 **characterized in that** includes a fourth door (9) vertically sliding, driven by a fifth actuator means (24) and fit for closing completely the second opening (16), in association with third door (8).

10. Device according to claim 1 **characterized in that** the first opening (15) has maximum width of 750 mm and maximum height of 1200 mm.

11. Device according to claim 1 **characterized in that** the first opening (15) has an upturned "L" shape.

12. Device according to claim 1 **characterized in that** the inclined support (5) is positioned at least at 1800 mm from the floor.

13. Device according to any of preceding claims **characterized in that** includes first sensor means (36) positioned at the first opening (15) for detecting interposed objects.

14. Device according to any of preceding claims **characterized in that** includes second weight sensors (35), connected to a bottom plan (13) of room (11) and fit to detect the person's presence or an object therein.

15. Device according to claim 1 **characterized in that** includes distribution means (60) to furnish a user with elements of use (65), for the device (1), through a third opening (17) thereof.

16. Device according to claim 15 **characterized in that** includes a fifth door (61), slidably moved by a seventh actuator means (26) for closing the third opening (17).

17. Device according to claim 15 **characterized in that** the distribution means (60) include holding means (62) of elements of use (65), consisting of at least bags or containers for the items (50), and transfer means (63) of said elements of use (65) through third opening (17).

18. Device according to claim 17 **characterized in that** the holding means (62) are rotatably driven by a gearmotor (67) and they include at least two containers (68), angularly spaced apart and fit for containing respective elements of use (65).

19. Device according to claim 18 **characterized in that** include third (69) and forth (70) sensor means for detecting respectively the angular position of holding means (62) and the presence of the respective element (65), at the container (68) adjacent to third opening (71).

20. Device according to claim 17 **characterized in that** the transfer means (63) include at least a sixth actuator means (25) for pusher means (64) fit for translating at least an element (65).

21. Device according to preceding claims **characterized in that** includes electronic control means connected at least to moving means (2), to doors (6, 7, 8, 9, 61), to distribution means (60) and to sensors (35, 36, 69, 70) for automatic driving the device (1).

22. Device according to claim 21 **characterized in that** includes interface means (40), connected to the electronic control means and fit for allowing a user to activate at least the withdrawal (A) and delivery (B) conditions.

23. Device according to claim 22 **characterized in that** the interface means (40) include at least a display (41), an alphanumeric keyboard (42), a reader for magnetic or microprocessor card (43).

24. Device according to claim 22 **characterized in that** the interface means (40) further include first (44), second (45) and third (46) buttons, respectively for withdrawing, delivering at least an article (50, 51) and for closing the doors (6,7).

25. Device according to claim 22 **characterized in that** the interface means (40) include withdrawal means (48) of cash money, in banknotes or coins.

26. Device according to claim 22 **characterized in that** the interface means (40) include connection means (47) for a mobile telephony network for data entry in the device (1) by a user's mobile phone apparatus.

27. Device according to any of preceding claims **characterized in that** each actuator means (20, 21, 22, 23, 24, 25, 26) consists of a pneumatic or hydraulic cylinder or a electric linear actuator.
